# FASCICULE DE BREVET EUROPEEN

(11) **EP 0 724 105 B1**
(45) Date de publication et mention de la délivrance du brevet: **17.05.2000**
(21) Numéro de dépôt: 95402954.2
(22) Date de dépôt: 27.12.1995
(51) Int. Cl.: F16L 9/18

(54) **Faisceau de canalisation pour véhicule automobile**
Rohranordnung für ein Kraftfahrzeug
Tube assembly for motor vehicle

(30) Priorité: 27.01.1995 FR 9500986
(43) Date de publication de la demande: 31.07.1996
(73) Titulaire: AUTOMOBILES PEUGEOT, 75116 Paris (FR); AUTOMOBILES CITROEN, 92200 Neuilly-sur-Seine (FR)
(72) Inventeur: Goly, Fabrice, F-95610 Eragny sur Oise (FR)
(74) Mandataire: Thinat, Michel

(56) Documents cités:
- EP-A- 0 235 959
- GB-A- 1 160 508
- GB-A- 2 044 909
- GB-A- 2 156 033
- GB-A- 2 258 513

## Description

La présente invention concerne un faisceau de canalisations pour véhicule automobile.

Le passage et la fixation de multiples tubes cheminant sous la caisse d'un véhicule automobile pour constituer des canalisations, par exemple de liquide de freins, posent de nombreux problèmes notamment pour les véhicules du type à suspension hydropneumatique.

En effet, la dimension du passage nécessaire des tubes est généralement importante compte-tenu du diamètre de chaque tube et du jeu exigé entre tubes. Ce jeu entre tubes doit être le plus constant possible, ce qui n'est pas toujours facile à garantir notamment sur des tubes séparés de grande longueur, par exemple d'environ 3 mètres, et manipulés en usine. La manipulation, le stockage et le transport des tubes de grande longueur présentant des parties droites et courbées, donc fragiles, sont généralement coûteux si l'on souhaite garantir le respect de la forme de ces tubes.

Le document EP-A-0 235 959 décrit deux solutions éliminant les inconvénients ci-dessus des faisceaux de canalisations connus. L'une de ces solutions consiste à maintenir des portions juxtaposées de tubes métalliques par une gaine. Dans ce cas, cependant, il y a un risque de corrosion par conservation d'humidité entre les tubes et entre les tubes et la gaine de maintien, notamment après déchirure accidentelle de cette gaine ou par capillarité à partir des extrémités.

La deuxième solution enseignée par le document EP-A-0 235 959 est d'utiliser des colliers maintenant jointivement des portions juxtaposées des tubes métalliques du faisceau de canalisations. Cependant, il y a un risque de frottement des tubes entre eux entre deux colliers successifs à cause des vibrations occasionées pendant le roulage du véhicule, d'où la production de bruit désagréable et une usure prématurée des tubes de canalisation ou d'un revêtement assurant leur protection.

Le document GB-A1160 508 décrit un faisceau de canalisations comprenant les caractéristiques du préambule de la revendication 1.

Cependant ce document antérieur ne concerne pas un faisceau de canalisations pour véhicule automobile et, par conséquent, ne pose pas le problème du passage et de la fixation d'un faisceau de canalisations cheminant sous la caisse d'un véhicule automobile.

La présente invention a pour but d'éliminer tous les inconvénients ci-dessus des faisceaux de canalisations connus.

A cet effet, l'invention propose un faisceau de canalisations pour véhicule automobile comprenant les caractéristiques énoncées dans la partie caractérisante de la revendication 1.

Le matériau est fusible et solidifié après sa fusion par échauffement lors de l'assemblage du faisceau.

De préfarence, le matériau fusible est de l'étain.

Le matériau est durcissable, lors de l'assemblage après application à l'état liquide ou pâteux sur les tubes.

Les portions juxtaposées des tubes du faisceau de canalisations sont rectilignes.

Ces portions juxtaposées sont alignées en nappe ou sont agencées en toron.

L'invention sera mieux comprise et d'autre buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention dans lesquels.

La figure 1 représente en vue de dessus un faisceau de canalisations assemblé conformément à l'invention.

La figure 2 est une vue de dessus d'une partie d'un faisceau de canalisations selon une variante.

La figure 3 est une vue en coupe suivant la ligne III-III de la figure 2.

La figure 4 est une vue en coupe suivant la ligne Iv-IV de la figure 2.

La figure 5 est une vue en coupe transversale représentant un mode de réalisation d'une pièce de fixation du faisceau assemblé de canalisations à la caisse du véhicule automobile.

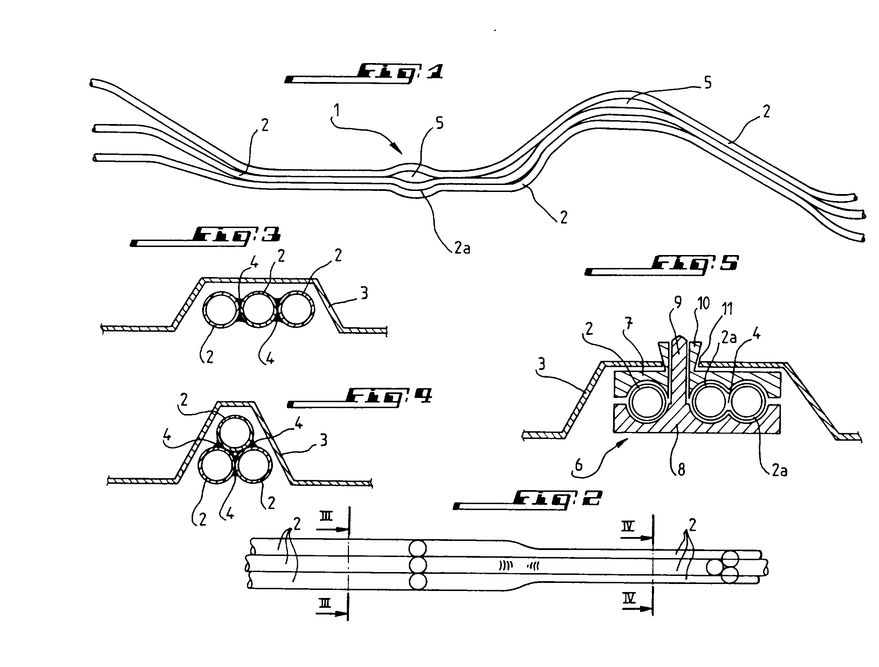

En se reportant en particulier à la figure 1, le faisceau de canalisations 1 pour véhicule automobile est constitué de plusieurs tubes métalliques 2 présentant des portions droites et des portions coudées suivant une configuration déterminée pour le passage et la fixation du faisceau 1 sous la caisse 3 du véhicule.

Les tubes métalliques 2 du faisceau 1 comportent des portions juxtaposées maintenues jointivement par des moyens de liaison 4 assurant l'assemblage du faisceau 1 avant sa fixation à la caisse 3 du véhicule.

Selon l'invention, ces moyens de liaison sont constitués par un matériau fusible 4 revêtant les tubes 2, dont les portions juxtaposées sont maintenues jointives par solidification du matériau 4 après sa fusion par échauffement lors de l'assemblage du faisceau 1.

De préférence, le matériau fusible est de l'étain.

Comme représenté notamment à la figure 1, les portions juxtaposées maintenues jointivement par le matériau fusible 4 sont pour la plupart rectilignes, mais il est bien entendu que ces portions peuvent être coudées 2a.

De plus, la figure 3 montre que les portions juxtaposées sont maintenues jointivement par un matériau fusible 4 et sont alignées en nappe dans un plan sensiblement horizontal tandis que la figure 4 montre que ces portions juxtaposées de tubes 2 sont assemblées en toron.

Le procédé d'assemblage du faisceau de canalisations 1 résulte déjà de la description qui précède et va être maintenant expliqué.

Des tubes classiques sont choisis et sont étamés sur toute leur longueur. Ensuite, ces tubes sont coupés à la longueur nécessaire et mis en forme, suivant les méthodes habituelles, mais en réservant des zones ou portions de tubes qui, lorsque ces tubes seront mis côte-à-côte, seront jointives. Une fois les tubes formés et positionnés relativement les uns par rapport aux autres, l'ensemble est chauffé jusqu'à fusion de l'étain. Après refroidissement et solidification de l'étain, les tubes sont solidarisés les uns aux autres. On obtient alors un ensemble ou faisceau de canalisations facilement manipulable pouvant être plus simplement fixé à la caisse du véhicule que les solutions connues jusqu'à maintenant, et occupant peu de place tranversalement aux tubes grâce à la juxtaposition de ceux-ci.

Le faisceau ainsi assemblé peut éventuellement être cintré dans certaines zones où les tubes sont alignés en nappe, l'axe de cintrage étant parallèle à cette nappe et perpendiculaire aux tubes.

Lors du procédé d'assemblage du faisceau 1, des zones préférentielles de fixation du faisceau sont créées en conformant des portions non-jointives des tubes 2 de manière à délimiter des espaces 5 ou "anneaux" permettant le passage de pièces de fixation.

La figure 5 représente un mode de réalisation d'une telle pièce de fixation 6 comprenant deux plaques de fixation 7, 8, une plaque supérieure 7 solidaire de la caisse 3 du véhicule et une plaque inférieure 8 fixée à la plaque supérieure 7 et comprenant un axe 9 de fixation à la plaque supérieure 7, l'axe 9 passant à travers l'espace 5 défini entre les portions non-jointives des tubes 2. L'axe 9 est fixé à la plaque 7 par tout moyen approprié, par exemple par serrage ou agrafage des languettes 10 d'accrochage de la plaque 7 dans une ouverture 11 de la caisse 3. Les plaques de fixation 7, 8, en position de fixation du faisceau 1, sont conformées de façon à épouser en les enserrant les portions jointives 2a ou non-jointives des tubes 2 définissant la zone de fixation. Le procédé permet également de faciliter certains passages du faisceau en organisant localement les tubes 2 en toron comme représenté aux figures 2 et 4.

D'autres matériaux que l'étain peuvent être utilisés pour maintenir jointivement les portions juxtaposées des tubes 2, dès l'instant où leur tension superficielle en phase liquide est suffisamment faible. En variante, le matériau peut être une résine durcissable lors de l'assemblage des tubes, appliquée sur ceux-ci par projection à l'état liquide ou pâteux puis durcie par exemple en présence d'un catalyseur approprié. De plus, le matériau reliant les tubes, s'il est inaltérable, peut même assurer la fonction anticorrosion des tubes.

## Revendications

1. Faisceau de canalisations dans lequel plusieurs tubes métalliques (2) présentent des portions juxtaposées maintenues jointivement par des moyens de liaison (4) constitués par un matériau revêtant les tubes (2), dont les portions juxtaposées sont maintenues jointives par solidification ou durcissement du matériau, caractérisé en ce que le faisceau de canalisations (1) est utilisé pour des véhicules automobiles, les moyens de liaison (4) assurent l'assemblage du faisceau (1) avant sa fixation à la caisse (3) du véhicule et en ce que des portions non jointives des tubes (2) sont conformées de manière à délimiter au moins un espace (5) pour le passage d'une pièce (9) de fixation du faisceau assemblé (1) à la caisse 3 du véhicule.

2. Faisceau de canalisations selon la revendication 1,caractérisé en ce que le matériau est fusible et solidifié après sa fusion par échauffement lors de l'assemblage.

3. Faisceau de canalisation selon la revendication 2, caractérisé en ce que le matériau fusible (4) est de l'étain.

4. Faisceau de canalisation selon la revendication 1, caractérisé en ce que le matériau est durcissable, lors de l'assemblage après application à l'état liquide ou pâteux sur les tubes.

5. Faisceau de canalisation selon l'une des revendications 1 à 4, caractérisé en ce que les portions juxtaposées sont rectilignes.

6. Faisceau de canalisations selon l'une des revendications précédentes, caractérisé en ce que les portions juxtaposées sont alignées en nappe.

7. Faisceau de canalisations selon l'une des revendications précédentes, caractérisé en ce que les portions juxtaposées sont disposées en toron.

## Patentansprüche

1. Rohranordnung, in der mehrere Metallrohre (2) nebeneinanderliegende Abschnitte aufweisen, die durch Verbindungsmittel (4) nebeneinanderliegend gehalten werden, die durch ein die Rohre (2) auskleidendes Material gebildet werden, deren nebeneinanderliegende Abschnitte durch Verfestigung oder Härtung des Materials nebeneinanderliegend gehalten werden, dadurch gekennzeichnet, daß die Rohranordnung (1) für Kraftfahrzeuge verwendet wird, die Verbindungsmittel (4) den Zusammenbau der Anordnung (1) vor ihrer Befestigung auf dem Wagenkasten (3) gewährleisten und daß die nicht nebeneinanderliegenden Abschnitte der Rohre (2) derart angepaßt sind, daß sie wenigstens einen Raum (5) für den Durchgang eines Befestigungsteils (9) der am Wagenkasten (3) zusammengebauten Anordnung (1) begrenzen.

2. Rohranordnung gemäß Anspruch 1, dadurch gekennzeichnet, daß das Material schmelzbar ist und nach seinem Schmelzen durch Erhitzen beim Zusammenbau verfestigbar ist.

3. Rohranordnung gemäß Anspruch 2, dadurch gekennzeichnet, daß das schmelzbare Material (4) aus Zinn ist.

4. Rohranordnung gemäß Anspruch 1, dadurch gekennzeichnet, daß das Material beim Zusammenbau nach der Aufbringung auf den Rohren im flüssigen oder pastigen Zustand härtbar ist.

5. Rohranordnung gemäß Anspruch 1 bis 4, dadurch gekennzeichnet, daß die nebeneinanderliegenden Abschnitte geradlinig sind.

6. Rohranordnung gemäß einem der vorherigen Ansprüche, dadurch gekennzeichnet, daß die nebeneinanderliegenden Abschnitte flächig angeordnet sind.

7. Rohranordnung gemäß einem der vorherigen Ansprüche, dadurch gekennzeichnet, daß die nebeneinanderliegenden Abschnitte litzenförmig angeordnet sind.

## Claims

1. Pipe bundle in which a plurality of metal tubes (2) have juxtaposed portions that are contiguously maintained by connecting means (4) formed by a material that coats the tubes (2), the juxtaposed portions of which are contiguously maintained by solidification or hardening of the material, characterized in that the pipe bundle (1) is used for automobile vehicles, the connecting means (4) are provided for assembling the bundle (1) before its fixation to the body (3) of the vehicle, and in that the non-contiguous portions of the tubes (2) are shaped so as to form at least one space (5) for passing a piece (9) for fixing the assembled bundle (1) to the vehicle body (3).

2. Pipe bundle according to claim 1, characterized in that the material is meltable, and solidified after its melting by heating upon the assembling step.

3. Pipe bundle according to claim 2, characterized in that the meltable material (4) is tin.

4. Pipe bundle according to claim 1, characterized in that the material is hardenable, upon the assembling step after its application in a liquid or pasty state on the tubes.

5. Pipe bundle according to one of claims 1 to 4, characterized in that the juxtaposed portions are rectilinear.

6. Pipe bundle according to one of the preceding claims, characterized in that the juxtaposed portions are aligned into a sheet.

7. Pipe bundle according to one of the preceding claims, characterized in that the juxtaposed portions are arranged into a strand.
